# EUROPÄISCHE PATENTSCHRIFT

(11) **EP 0 387 524 B1**
(45) Veröffentlichungstag und Bekanntmachung des Hinweises auf die Patenterteilung: **14.09.1994**
(21) Anmeldenummer: 90102660.9
(22) Anmeldetag: 12.02.1990
(51) Int. Cl.: G05D 7/01

(54) **2-Wege-Stromventil**
Two-way flow control valve
Vanne de commande de débit à deux voies

(30) Priorität: 15.03.1989 DE 3908377
(43) Veröffentlichungstag der Anmeldung: 19.09.1990
(73) Patentinhaber: FLUTEC FLUIDTECHNISCHE GERÄTE GMBH, D-66272 Sulzbach (DE)
(72) Erfinder: Jung, Rüdiger, Dipl.-Ing., D-6670 St. Ingbert (DE)
(74) Vertreter: Patentanwälte Bartels und Partner

(56) Entgegenhaltungen:
- WO-A-87/04277
- DE-A- 2 347 316
- DE-A- 3 211 545
- US-A- 4 066 096
- US-A- 4 080 993

## Beschreibung

Die Erfindung betrifft ein Ventil, insbesondere ein 2-Wege-Stromregelventil gemäß den Merkmalen des Oberbegriffs des Anspruchs 1.

Bei den heute üblicherweise am Markt erhältlichen Stromregelventilen handelt es sich zum einen um solche in Patronenbauweise, die in der Regel als sogenannte Konstantstromregelventile ausgebildet sind, und zum andern um Stromregelventile in Gehäusebauweise.

Bei den Konstantstromregelventilen, wie sie die Fachwelt unter anderem durch die DE 29 17 851 A1 kennt, sind für die Regelung des Durchflußstromes für den gesamten Einsatzbereich, der in der Praxis auftritt, verschiedene Blenden mit unterschiedlichen Durchmessern erforderlich. Dies bringt eine große Anzahl an Blenden mit sich, deren Bereitstellung und Lagerhaltung aufwendig ist. Bei einer Änderung der Einstellung des Volumenstromes ist das Ventil für den Austausch der Blenden jedesmal zu öffnen und dadurch ein Eingriff in den internen Ventilaufbau vorzunehmen, was zu Ausfallzeiten führt. Ein freies Einstellen des Volumenstromes gemäß der Lehre der Erfindung ist hiermit nicht möglich. Im übrigen sind auch nicht die erfindungsgemäßen zusätzlichen Mittel zum Erfassen des Eingangsdruckes in Form einer Ausgleichsbohrung vorhanden.

Bei den Stromregelventilen in Gehäusebauweise der üblichen Art ist hingegen eine Veränderung des Einstellvolumenstroms über den gesamten Einsatzbereich ohne Austausch von solchen Meßblenden möglich. Ein dahingehendes Stromregelventil, das gattungsgleich dem erfindungsgemäßen Ventil ist, ist durch die DE 32 11 545 A1 vorbekannt. Das dort in der Fig.5 dargestellte Ventil weist in den Mitteln zum freien Einstellen der Menge des Durchflußstromes in Form einer einstellbaren Meßblende eine Ausgleichsbohrung auf, mittels der der am Eingang des Ventils anstehende Druck erfaßbar ist. Diese Ausgleichsbohrung, die in ihrem Inneren eine Drosselstelle aufweist, ist an eine Steuerungseinrichtung angeschlossen, mittels der sich die Meßblende für eine Öffnungs- oder Schließbewegung am Eingang des Ventiles ansteuern läßt. Das Stellglied (Regelkolben) dieses bekannten Ventils, mittels dem an seinem Ausgang die Menge des Durchflußstromes regulierbar ist, ist der Einwirkung des am Eingang anstehenden Druckes, der Kraft eines Kraftspeichers in Form einer Feder sowie des am Ausgang des Ventils anstehenden Druckes ausgesetzt, der über zusätzlich im Gehäuse des Ventils angeordnete Hilfsbohrungen in denjenigen Ventilraum geführt ist, in dem sich das Stellglied bewegt. Hierdurch entsteht eine ungünstige Strömungsführung im Ventil, so daß in Bezug auf die jeweilige Baugröße ein relativ geringer Einsatzbereich derartiger Ventile gegeben ist. Auch ist diese bekannte Bauart aufgrund der Hilfsbohrungen in der Bauweise aufwendig und Volumen beanspruchend.

Durch die DE 24 32 823 A1 ist ein gattungsfremdes Ventil bekannt, dessen Mittel zum freien Einstellen der Menge des Durchflußstromes aus einer einstellbaren Spindel gebildet sind, die mit ihrem konisch verlaufenden Endteil in eine durchgehende Bohrung des Stellgliedes (Regelkolben) eingreift. Zusätzliche Mittel zum Erfassen des am Eingang des Ventils anstehenden Druckes in Form einer Ausgleichsbohrung weist dieses bekannte Ventil nicht auf.

Ändert sich der Druck am Eingang des Ventils zu höheren Werten hin, wird das Stellglied zum Erhalt der konstanten Durchflußmenge relativ zu der feststehenden Spindel bewegt, wobei der Durchflußquerschnitt an der Stelle der durchgehenden Bohrung im Stellglied kontinuierlich abnimmt. Dieser variable Meßblendenquerschnitt bringt bei dem bekannten Ventil immer eine fallende Regelkennlinie mit sich.

Ein anderes gattungsfremdes Ventil, das für die Steuerung von Kaltwasser-Kühlern im Untertagebau verwendbar ist, ist durch die DE 31 19 406 A1 vorbekannt, dessen Mittel zum freien Einstellen der Menge des Durchflußstromes aus einem veränderbaren Schlitzquerschnitt im Stellglied gebildet wird. Zusätzliche Mittel zum Erfassen des am Eingang anstehenden Druckes in Form einer Ausgleichsbohrung sind hier ebenfalls nicht vorhanden. Das Ventil baut groß auf und der Strömungsverlauf des Fluids, das auf dem Weg zum Ausgang des Ventiles hin im Bereich des Regelkolbens zweimal umgelenkt wird, ist ungünstig.

Ferner ist es bei Stromregelventilen in Patronenbauweise, als auch in Gehäusebauweise bekannt, für die Regelung des Volumenstromes die bewegbaren Teile des Ventiles derart anzuordnen, daß Doppelführungen entstehen, wie das auch bei dem Ventil gemäß der DE 32 11 545 A1 der Fall ist, wobei jedoch die Gefahr des Verklemmens gegeben ist, was Fehlfunktionen mit sich bringt.

Demgegenüber liegt der Erfindung die Aufgabe zugrunde, ein im Strömungsverhalten günstiges Ventil geringer Baugröße zu schaffen, das als Einbausatz gleichermaßen in der Patronenals auch in Gehäusebauweise auszuführen ist, wobei der Volumenstrom unter Einhalten einer vorgebbaren Regelkennlinie über den gesamten Einsatzbereich frei einstellbar ist, ohne daß aufwendige externe Hilfsbohrungen, Ringkanäle oder in ihren Eigenschaften unkontrollierbare Doppelführungen Verwendung finden.

Diese Aufgabe wird mit den Merkmalen des Anspruchs 1 gelöst. Mit den zusätzlichen Mitteln zum Erfassen des am Eingang des Ventils anstehenden Druckes in Form der Ausgleichsbohrung ist ein Teil der mit den hierfür vorgesehenen Mitteln frei einstellbaren Menge des über den Eingang des Ventils einströmenden Durchflußstromes an ein Stellglied (Regelkolben) weiterleitbar, das in Abhängigkeit des sich an ihm einstellenden Kräftegleichgewichtes, das sich aus der wirksamen Kraft eines Kraftspeichers und der wirksamen Kraft des am Ausgang des Ventils herrschenden Druckes, sowie zumindest aus einer Kraftkomponente des am Eingang des Ventils anstehenden Druckes zusammensetzt, die Menge des durch das Ventil hindurchfließenden Durchflußstromes reguliert. Mit dieser "inversen" Druckbeaufschlagung des Stellgliedes über die Ausgleichsbohrung ist ein ungehinderter, strömungsgünstiger und damit nahezu verlustfreier Durchtritt des Volumenstromes durch das Ventil gewährleistet. Mit der erfindungsgemäßen Lösung läßt sich ferner die Menge des durch das Ventil hindurchströmenden Fluids entlang einer vorgebbaren Regelkennlinie konstant halten, und zwar über den gesamten Bereich des mit den hierfür vorgesehenen Mitteln frei einstellbaren druckabhängigen Volumenstroms, auch wenn Volumenstromänderungen am Ein- und/oder Ausgang des Ventils auftreten. Mit der erfindungsgemäßen Anordnung ist eine äußerst kompakte Bauweise des Ventils erreicht, mit dem sich als Einbausatz bestehende Ventilausführungen ohne größere bauliche Maßnahmen umrüsten lassen.

Soweit die Mittel zum freien Einstellen des Volumenstromes aus einer Meßblende gebildet sind, die einen Schlitz aufweist, der gemäß Anspruch 7 mindestens zwei Flanken hat, die im spitzen Winkel zueinander verlaufend in mindestens einer Verbindungslinie enden, ist hierdurch eine feine Auflösung beim Einstellen des Durchflußstromes des Ventiles möglich.

Besteht die Aufnahmebohrung im Ventilgehäuse oder in der Patrone aus einzelnen Bohrungen, deren Durchmesser gemäß Anspruch 11 in Richtung der Meßblende abnehmen, soweit das erfindungsgemäße Ventil in die Aufnahmebohrung eingesetzt ist, ist eine Aufnahmebohrung gegeben, die mittels eines einseitigen und damit kostengünstigen Bohrverfahrens herstellbar ist.

Im folgenden wird nun das erfindungsgemäße Ventil an Hand eines Ausführungsbeispieles nach den Zeichnungen im einzelnen erläutert.

Es zeigen:
- Fig.1: einen Längsschnitt durch das Ventil, das in der Aufnahmebohrung eines Ventilgehäuses aufgenommen ist;
- Fig.2: einen Schnitt nach der Linie I - I in Fig. 1 durch den unteren Teil des Ventiles.

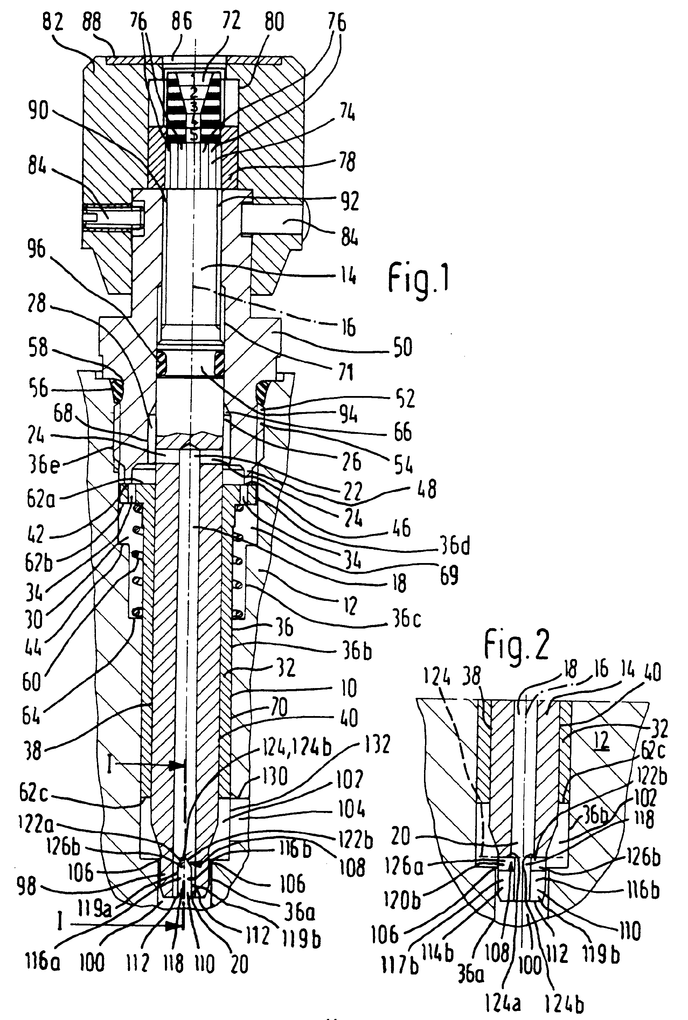

Fig. 1 zeigt das erfindungsgemäße Ventil, das in einer Aufnahmebohrung 10 eines Ventilgehäuses 12 aufgenommen ist. Anstelle dieses Ventilgehäuses 12 könnte aber auch eine Patrone Verwendung finden, in der die Aufnahembohrung entsprechend verläuft. Das Ventil weist eine Drosselspindel 14 auf, entlang deren ihrer Längsachse 16 und in ihrer unteren Hälfte eine Ausgleichsbohrung 18 verläuft, deren in Fig.1 gesehen unteres Ende 20 in die Umgebung mündet, wohingegen ihr in Fig.1 gesehen oberes Ende 22 über zwei in Fig.1 gesehen horizontal verlaufende Querbohrungen 24 mit einem ersten Druckraum 26 verbunden ist.

Dieser erste Druckraum 26 ist in Fig.1 gesehen in einen oberen Teilraum 28 und in einen unteren Teilraum 30 mittels eines Regelkolbens 32, der in der Fachsprache auch als Druckwaage bezeichnet werden kann, unterteilt.

Dieser Regelkolben 32 weist, wie dies insbesondere die Fig.1 zeigt, an der Stelle des ersten Druckraumes 26, zwei Verbindungsbohrungen 34 auf, die den oberen Teilraum 28 mit dem unteren Teilraum 30 verbinden. Der Regelkolben 32 ist innerhalb dieses ersten Druckraumes 26, entlang der Wand 36 der Aufnahmebohrung 10 und der Außenwand 38 der Drosselspindel 14 geführt, längsverfahrbar angeordnet. Hierfür ist der Regelkolben 32 im wesentlichen T-förmig ausgebildet und weist in seiner Längsrichtung eine durchgede Bohrung 40 für die Aufnahme der Drosselspindel 14 auf. Für die angesprochene Längsführung des Regelkolbens 32 im ersten Druckraum 26 ist genauer gesagt der Längsbalken des T-förmigen Regelkolbens 32 entlang eines Wandabschnittes 36b der Wand 36 der Aufnahmebohrung 10 geführt, wohingegen der scheibenförmige Querbalken an seinem Außenumfang entlang eines Wandabschnittes 36d geführt ist, dessen Durchmesser größer ist als derjenige des Wandabschnittes 36b. Die Bewegung des Regelkolbens 32 bei dessen Längsverfahren, wie dies insbesondere die Fig. 1 zeigt, ist von einem oberen Anschlag 42 und von einem unteren Anschlag 44 begrenzt. Der obere Anschlag 42 ist von der in Fig.1 gesehen unteren Seitenwand 46 eines Ringes 48 gebildet, der Teil eines Ventilkörpers 50 ist, der mittels eines Außengewindes 52 in ein Gewinde 54 einschraubbar ist, das aus einem Wandabschnitt 36e der Wand 36 der Aufnahmebohrung 10 gebildet ist. In Fig.1 ist der Ventilkörper 50 in seiner eingeschraubten Stellung, die er nach Einbau in das Ventilgehäuse 12 einnimmt, dargestellt. Hierbei ist das Innere des Ventils über eine Ringdichtung 56, die in einer Aufnahme 58 des Ventilgehäuses 50 angeordnet ist, abdichtbar.

Der untere Anschlag 44 ist aus einem Absatz in der Wand 36 der Aufnahmebohrung 10 gebildet, der sich aus den unterschiedlichen Bohrungsdurchmessern der Wandabschnitte 36d und 36c ergibt, wobei der letztgenannte Wandabschnitt 36c hinsichtlich der Größe seines Durchmessers zwischen den Bohrungsdurchmessern der Wandabschnitte 36b und 36d der Wand 36 liegt und derart groß gewählt ist, daß zwischen dem Wandabschnitt 36c und der Außenwand des Längsbalkens des T-förmigen Regelkolbens 32 noch ein Kraftspeicher in Form einer Druckfeder 60 anordenbar ist.

Der Regelkolben 32 weist drei durch ein Fluid beaufschlagbare Flächen 62a, b und c auf, wobei in Fig.1 gesehen die obere dem oberen Anschlag 42 zugekehrte Fläche 62a des Regelkolbens 32 die Größte ist, wohingegen die in Fig.1 gesehen nach unten hin nachfolgende, am Querbalken des T-förmigen Regelkolbens 32 angeordnete Fläche 62b die mittlere Fläche ist und die kleinste Fläche 62c am in Fig.1 gesehen unteren Ende des Regelkolbens 32 angeordnet ist. Addiert man die Flächeninhalte der kleinsten Fläche 62c und der mittleren Fläche 62b zusammen, ergibt sich in etwa die Fläche der größten Kolbenfläche 62a des Regelkolbens 32. In der in Fig.1 gezeigten Stellung des Ventils drückt die Druckfeder 60, die mit ihrem in Fig.1 gesehen oberen Ende sich gegen die mittlere Fläche 62b und mit ihrem anderen Ende gegen einen Absatz 64 in der Wand 36 der Aufnahmebohrung 10 abstützt, den Regelkolben 32 gegen den feststehenden oberen Anschlag 42, der durch den fest mit dem Ventilgehäuse 12 verbundenen Ventilkörper 50 gebildet ist.

Der obere Teilraum 28 des ersten Druckraumes 26 ist durch einen Hohlraum 66 gebildet, der von einer Innenwand 68 des Ventilkörpers 50 und der Außenwand 38 der Drosselspindel 14 sowie der Fläche 62a begrenzt ist.

Der untere Teilraum 30 hingegen ist durch einen Hohlraum 69 gebildet, der von den Wandabschnitten 36c und 36d der Wand 36 und der Außenwand 70 des Regelkolbens 32 sowie durch die mittlere Fläche 62b begrenzt ist.

Die Drosselspindel 14 ist in einer Mittenbohrung 71 des Ventilkörpers 50 geführt und erstreckt sich über die gesamte Länge des Ventilkörpers 50. In ihrer in der Fig. 1 gezeigten Lage befindet sie sich in einer ihrer ausgefahrenen Stellungen. An ihrem in Fig.1 gesehen oberen Ende weist die Drosselspindel 14 eine Meßskala 72 auf, die mit den in der Fig.1 dargestellten Meßstufen "1" bis "5" versehen ist und bei der sich auf Grund der Querschraffierung auch Halbwerte ablesen lassen. Diese Meßskala 72 ist mit einem Längsführungsteil 74 verbunden, das einzelne Längsführungen 76 aufweist, die parallel zu der Längsachse 16 des Gehäuses verlaufen und die in entsprechend geformten Nuten eines Überwurfteiles 78 geführt sind. Dieser Überwurfteil 78 ist drehbar und axial verschiebbar in der Ausnehmung 80 eines Stellteiles 82 geführt, das für die Betätigung der Drosselspindel 14 von Hand vorgesehen ist.
In der in Fig.1 dargestellten Stellung des Ventils stützt sich der Überwurfteil 78, das der Führung des Längsführungsteils 74 der Drosselspindel 14 dient, auf der Oberseite des Ventilkörpers 50 ab.

Das Stellteil 82 umgreift das in Fig. 1 gesehen obere Ende des Ventilkörpers 50 und ist mit diesem drehbar aber axial in Richtung der Längsachse 16 des Ventils unverschiebbar über lösbare Stiftverbindungen 84 mit diesem verbunden. Für den Durchgriff der Meßskala 72 weist das Stellteil 82 an seiner Oberseite einen Durchgang 86 auf, der von einer Meßplatte 88 umrandet ist, deren in der horizontalen Ebene bearbeitete Oberfläche das Ablesen der Meßskala 72 erleichtert, sofern diese mit ihrer Skalierung mit der Oberseite der Meßplatte 88 in einer Ebene liegt oder über diese hinausragt.

Zwischen der Ausgleichsbohrung 18 und dem Längsführungsteil 74 der Drosselspindel 14 weist diese an ihrer dem Längsführungsteil 74 zugekehrten Seite an ihrer Außenwand 38 einen Gewindeabschnitt 90 auf, der mit seinen Gewindegängen in entsprechende Gewindegänge am Innenumfang 92 des Ventilkörpers 50 eingreift.
Bei den hier angesprochenen Gewindegängen sind eingängige Gewinde gemeint, die derart ausgelegt sind, daß bei einer vollständigen Umdrehung des Stellteiles 82 von Hand, also bei einer Umdrehung um 360° ein Skalenteil "1" , "2" , "3", "4" oder "5" mit seiner unteren Begrenzungslinie zum nachfolgenden Skalenteil in einer Ebene mit der Oberseite der Meßplatte 88 liegt. Anstelle dieser eingängigen Gewinde können auch mehrgängige Gewinde Anwendung finden, die derart angelegt sein können, daß sich hier ein anderes Übersetzungsverhältnis ergibt, also beispielsweise mit einer geringeren Anzahl von Umdrehungen am Stellteil 82 sich ein größerer Verstellweg der Drosselspindel 14 ergibt oder dergleichen. Ferner weist die Drosselspindel 14 unterhalb ihres Gewindeabschnittes 90 einen im Durchmesser reduzierten Bund 94 auf, auf dem ein Dichtungsring 96 angeordnet ist, der den ersten Druckraum 26 gegenüber der Umgebung abdichtet.

Am in Fig.1 gesehen unteren Ende verjüngt sich der Regelkolben 32 konisch in ein zylindrisches Endstück 98. Dieses Endstück 98 greift in einen Anschluß 100 ein, der den Eingang des Ventiles darstellt und der über eine Leitung (nicht dargestellt) an ein Aggregat angeschlossen ist, beispielsweise an eine über einen Motor antreibbare Hydropumpe, das Fluid unter einem bestimmten Druck und in einer bestimmten Menge an den Anschluß 100 weitergibt. Dieser Anschluß 100 ist aus einer Bohrung im Ventilgehäuse 12 gebildet, deren Wandabschnitt 36a einen Durchmesser aufweist, der geringer ist als derjenige des nach oben in Fig.1 gesehen nachfolgenden Wandabschnittes 36b der Aufnahmebohrung 10.

Der Anschluß 100 mündet, wie dies insbesondere die Fig. 1 und 2 zeigen, in einen zweiten Druckraum 102 ein, der von der kleinsten Kolbenfläche 62c des Regelkolbens 32 und einem Teil des Wandabschnittes 36b der Wand 36 der Aufnahmebohrung 10 sowie durch das Endstück 98 der Drosselspindel 14 begrenzt ist und der den Ausgang des Ventiles bildet. Ferner weist dieser zweite Druckraum 102, einen weiteren Anschluß 104 auf, dessen Durchmesser im wesentlichen dem Durchmesser des Anschlusses 100 entspricht und der über eine Leitung (nicht dargestellt) an einen Fluidabnehmer, beispielsweise in Form einer Hydropumpe (nicht dargestellt), angeschlossen ist.

An der Stelle, wo der Anschluß 100 in den zweiten Druckraum 102 mündet, greift das untere Ende der Drosselspindel 14, also deren Endstück 98, in diesen Anschluß 100 derart ein, daß die Außenwand 38 der Drosselspindel 14 an dieser Stelle entlang des Wandabschnittes 36a der Aufnahmebohrung 10 bewegbar und durch diesen geführt ist. Dabei ist in Abhängigkeit von dem Bohrungsdurchmesser des Anschlusses 100 die Drosselspindel 14 für den Eingriff in diesen Anschluß entsprechend konisch verjüngt. Das untere Ende der Drosselspindel 14 ist wie im folgenden noch beschrieben werden wird, derart ausgebildet, daß es mit dem Rand 106 zusammen, der an der Stelle des Übergangs zwischen dem Wandabschnitt 36a und dem Wandabschnitt 36b der Aufnahmebohrung 10 gebildet ist, eine als Ganzes mit 108 bezeichnete Meßblende bildet. Zur Bildung dieser Meßblende 108 weist die Drosselspindel 14 an ihrem unteren Endstück einen Schlitz 110 auf, der sich im wesentlichen horizontal verlaufend und senkrecht auf der Längsachse 16 des Ventiles stehend durch das untere Ende der Drosselspindel 14 durchgehend erstreckt. Dieser Schlitz 110 mündet mit seinem in Fig. 1 und 2 gesehen unteren Ende 112 in den Anschluß 100 ein. Ferner besteht der Schlitz 110 aus jeweils einander benachbart gegenüberliegenden Schlitzhälftenpaaren 114a,b und 116a,b, wobei in Fig. 1 nur das dem Betrachter zugekehrte eine Schlitzhälftenpaar 116a, 116b zeigt, wohingegen das andere Schlitzhälftenpaar 114a, 114b in der Zeichenebene dem Betrachter abgekehrt deckungsgleich mit dem einen Schlitzhälftenpaar 116a, 116b hinter diesem angeordnet ist. Die Fig. 2 verdeutlicht dies, indem sie die Ansicht auf die Anordnung der Schlitzhälften 114b und 116b der Schlitzhälftenpaare 114a,b bzw. 116a,b zeigt. Jedes dieser Schlitzhälftenpaare 114a,b; 116a,b begrenzt mit seinen Wandungen 117a,b bzw. 119a,b, wie dies insbesondere die Fig. 2 zeigt, einen Kanal 118, der in den Anschluß 100 mündet und der so die Ausgleichsbohrung 18 mit dem Anschluß 100 verbindet. Die Wände 117a,b und 119a,b der beiden Schlitzhälftenpaare 114a,b bzw. 116a,b laufen an ihren in Fig. 1 und 2 gesehen oberen Enden über die beiden Flankenpaare 120a,b bzw. 122a,b in jeweils einer Verbindungslinie 124a bzw. 124b zusammen, die auf einer fiktiven Verbindungslinie 124 liegen, die im wesentlichen horizontal verlaufend senkrecht auf der Längsachse 16 der Drosselspindel 14 und des Ventiles steht.

Die jeweiligen einen spitzen Winkel miteinander einschließenden einander benachbarten Flankenpaare 120a,b und 122a,b durchgreifen, ebenso wie die Wände 117 a,b und 119 a,b der Schlitzhälftenpaare 114a,b bzw. 116a,b die Seitenwand der Drosselspindel 14 vollständig, so daß der von den Wänden 117a,b und 119a,b gebildete Zwischenraum 126a,b den Kanal 118 der Ausgleichsbohrung 18 mit dem zweiten Druckraum 102 durchgehend verbindet, soweit die fiktive Verbindungslinie 124 nur weit genug über den durch das Ventilgehäuse 12 gebildeten Rand 106 mittels der Drosselspindel 14 angehoben ist. Der Ausgang des Ventils ist also durch den zweiten Druckraum 102, der sich unmittelbar an die Zwischenräume 126a,b anschließt, soweit diese über den Rand 12 des Ventils nach oben hin hinausragen, gebildet. Hierbei gilt, je weiter sich die Verbindungslinie 124 vom Rand 106 in ihrer in den Fig. 1 und 2 gezeigten Stellungen nach oben mittels der Drosselspindel 14 weg bewegt, umso größer wird der Abstand des jeweiligen Flankenpaares 120a,b und 122a,b oberhalb des Randes 106 voneinander und umso größer wird der oberhalb des Randes 106 sich befindende Zwischenraum 126a bzw. 126b, so daß die vom Anschluß 100 ankommende Fluidmenge mit dem Einfahren der Drosselspindel 14 in das Ventil zunehmend in den zweiten Druckraum 102 geleitet wird. Wird die Drosselspindel 14 durch Betätigen des Stellteiles 82 weiter angehoben, nehmen die beiden Flankenpaare 120a,b und 122a,b an der Stelle des Randes 106 ihren größtmöglichen Abstand voneinander ein und anschließend tauchen die parallel zueinander und parallel zu der Längsachse 16 verlaufenden Wandabschnitte der Wände 117a,b und 119a,b oberhalb des Randes 106 auf, wodurch die Durchflußmenge weiter zunimmt.
Das erfindungsgemäße Ventil ist so eingestellt, daß die Drosselspindel 14 mit ihrem Endstück 98, gleichgültig, welche Volumeneinstellung vorliegt, immer noch zum Teil in den Anschluß 100 ragt, so daß die Fluidmenge gezwungen ist, über die Meßblende 108 zu strömen. Würde die Drosselspindel 14 darüber hinaus angehoben werden, käme das Endstück 98 außer Eingriff mit dem Anschluß 100 und das Fluid würde unter Umgehung der Meßblende 108 direkt in den Anschluß 104 über den zweiten Druckraum 102 strömen.

In seiner in der Fig. 1 gezeigten, unbetätigten Stellung, bei der er mittels der Druckfeder 60 mit seiner Fläche 62a in Anlage gebracht ist mit dem Anschlag 42 des Ventilgliedes 50, schließt der Regelkolben 32 mit seiner unteren wirksamen Fläche 62c im wesentlichen mit der in Fig. 1 gesehen oberen Bohrungswand 130 des Anschlusses 104 ab. Die Stelle, an der der Anschluß 104 in den zweiten Druckraum 102 mündet, ist durch den Regelkolben 32 verschließbar, so daß hierdurch an der Stelle des Einmündens des Anschlusses 104 in den zweiten Druckraum 102 eine Regelblende 132 gebildet ist, mittels der die Durchflußmenge des durch das Ventil hindurchströmenden Fluids regulierbar ist.

Im folgenden soll nun die Funktionweise dieses Stromregelventiles näher erläutert werden. Hierbei ist das Stromregelventil, um ein Arbeitsbeispiel zu geben, in einen Hydraulikkreislauf eingesetzt, bei dem lastabhängig Druckschwankungen auftreten können.

In Fig. 1 ist das Ventil in seiner unbetätigten Stellung dargestellt. In dieser unbetätigten Stellung wird der Regelkolben 32 mittels der Druckfeder 60 gegen den oberen Anschlag 42 des Ventilkörpers 50 gedrückt. Das im Anschluß 100 anstehende unter einem bestimmten Druck stehende Fluid strömt über den Kanal 118, die Ausgleichsbohrung 18 sowie die Querbohrungen 24 in den oberen Teilraum 28 und von dort über die Verbindungsbohrungen 34 in den unteren Teilraum 30 des ersten Druckraumes 26. Somit steht im gesamten ersten Druckraum 26 der im Anschluß 100 wirkende Druck an, der die Flächen 62a und 62b des Regelkolbens 32 beaufschlagt. Hierbei schließt auf Grund des im ersten Druckraum 26 an den Flächen 62a und 62b wirkenden Druckes die wirksame Fläche 62c des Regelkolbens 32 mit der Oberseite der Bohrungswand 130 des Anschlusses 104 im wesentlichen ab. Die Verbindungslinie 124 liegt, wie dies insbesondere die Fig. 1 zeigt, im wesentlichen in der Ebene mit dem Rand 106 des Ventilgehäuses 12, so daß über die Zwischenräume 126a,b kein im Anschluß 100 bereitgestelltes und unter Druck stehendes Fluid in den zweiten Druckraum 102 und damit gegebenenfalls über den weiteren Anschluß 104 abgeführt werden kann. In dieser nicht betätigten Stellung des Ventils befindet sich die Meßskala 72, wie dies die Fig. 1 zeigt, unterhalb der Meßplatte 88, so daß die Bedienperson hieraus ersehen kann, daß das Ventil in seiner unbetätigten Stellung ist.

Dreht nun die Bedienperson in entsprechender Drehrichtung am Stellteil 82, wird mittels des mit dem Stellteil 82 verbundenen Überwurfteiles 78, der sich in Eingriff befindet mit dem Längsführungsteil 74, die Drosselspindel 14 dank des Gewindeabschnittes 90 in Fig. 1 gesehen nach oben angehoben, mithin in eine ihrer eingefahrenen Stellungen bewegt. Hierbei entfernt sich die Verbindungslinie 124 in Fig. 1 gesehen nach oben von dem Rand 106 des Ventilgehäuses 12 weg und nimmt beispielsweise die in Fig. 2 gezeigte Stellung ein. In dieser Stellung gibt die Meßblende 108 den Weg für das unter Druck stehende Fluid über den Kanal 118 der Ausgleichsbohrung 18 in den zweiten Druckraum 102 und damit zu dem weiteren Anschluß 104 hin frei. Je weiter nun die Drosselspindel 14 über das Stellteil 82 eingefahren wird, umso mehr entfernt sich die Verbindungslinie 124 von dem Rand 106 nach oben weg und umso größer ist die Fluidmenge, die über die beiden Schlitzhälften 114a, b und 116a, b in den zweiten Druckraum 102 und damit über den Anschluß 104 strömt. Hierbei bewegt sich auch das obere Ende der Drosselspindel 14, das mittels der Längsführung 76 in dem Längsführungsteil 74 drehbar und axial verschiebbar geführt ist, weiter nach oben, so daß die Meßskala 72 über die Meßplatte 88 des Stellteiles 82 hinausragt und eine Ablesung der jeweiligen Ventilstellung, d.h. der Stellung der Meßblende 108 und damit des Volumenstromes erlaubt.

Wie bereits eingangs ausgeführt wurde, ist der Sinn derartiger Stromventile, den Durchfluß unabhängig von der Druckdifferenz, die zwischen Ventilein- und -ausgang herrscht, konstant zu halten, so daß der einmal eingestellte Ölstrom auch bei Druckschwankungen konstant bleibt. Dadurch, daß bei dem erfindungsgemäßen Stromventil über die Ausgleichsbohrung 18 das im Anschluß 100 unter Druck anstehende Fluid über die beiden Querbohrungen 24 in den ersten Druckraum 26 geleitet wird und dieser Druckraum in zwei Teilräume 28 und 30 unterteilt ist, die über Verbindungsbohrungen 34 im Regelkolben 32 in Verbindung stehen, stellt sich in diesen beiden Teilräumen 28 bzw. 30 des ersten Druckraumes 26 und damit an den beiden Flächen 62a und 62b des Regelkolbens 32 der im Anschluß 100 herrschende Druck des Fluids ein. Befindet sich nun die Drosselspindel beispielsweise in der in der Fig. 2 gezeigten Stellung, strömt das im Anschluß 100 mit einem vorgebbaren Druck anstehende Fluid über die beiden Schlitzhälftenpaare 114a,b und 116a,b in den zweiten Druckraum 102. Hierdurch stellt sich im Druckraum 102 ein anderer Druck als im Anschluß 100 ein. Soweit der weitere Anschluß 104 gegenüber dem zweiten Druckraum 102 in Bezug auf seine wirksame Querschnittsfläche hier im wesentlichen sein Bohrungsdurchmesser verändert ist, stellt sich in diesem Anschluß 104 ebenfalls ein anderer Druck als im zweiten Druckraum 102 ein. Befindet sich nun das erfindungsgemäße Ventil in seiner in der Fig. 2 gezeigten Stellung und ist der Druck im Anschluß 100 konstant, wird der über den Anschluß 104 angeschlossene Druckabnehmer mit einem Fluid in einer bestimmten Menge und mit einem konstanten Druck versorgt, wobei der im Anschluß 100 anstehende Druck größer ist als der im Druckraum 102, der wiederum größer ist als der im Anschluß 104 herrschende Druck. Es besteht also hierbei in Richtung zum Anschluß 104 hin ein abnehmendes Druckgefälle. Tritt nun im Anschluß 100, durch das Hydrauliksystem bedingt, in dem das erfindungsgemäße Ventil eingesetzt ist, eine Volumenstromerhöhung auf, die, soweit der Regelkolben 32 nicht vorhanden wäre, unmittelbar über den zweiten Druckraum 102 und den Anschluß 104 des Ventils weitergegeben würde, erhöht sich der Druck am Eingang 100 des Ventiles, was aufgrund der Ausgleichsbohrung 18 auch eine Druckerhöhung im ersten Druckraum 26 bewirkt. Da der am Anschluß 100 herrschende Druck nun gleichermaßen im oberen und unteren Teilraum 28 bzw. 30 des ersten Druckraumes 26 und damit gleichermaßen an den Flächen 62a und 62b des Regelkolbens 32 ansteht, ist die allein wirksame Fläche der durch den Regelkolben 32 gebildeten Druckwaage die Fläche 62c des Regelkolbens. Der im ersten Druckraum 26 anstehende Druck ist nun größer als der Druck, der herrscht, wenn das Ventil seine in Fig.1 gezeigte Stellung einnimmt, und bewirkt aufgrund des am Regelkolben 32 auftretenden Kräftegleichgewichtes, daß dieser in Fig. 1 und 2 gesehen sich nach unten verschiebt, wobei sich der freie Querschnitt der Regelblende 132 verringert. Es wird also entsprechend dem Kräftegleichgewicht an der Druckwaage in Form des Regelkolbens 32 in Abhängigkeit des durch die Drossel frei einstellbaren Meßblendenquerschnittes der gewünschte Volumenstrom an der nachgeschalteten Regelblende 132 ausgeregelt. Da die Regelblende 132 nun im Querschnitt verringert ist, nimmt auch der durch diese Regelblende hindurchfließende Volumenstrom ab. Der Regelkolben 32 stellt sich also je nach dem an ihm herrschenden Kräftegleichgewicht in eine Stellung ein, bei der der Durchflußstrom durch das Ventil hindurch konstant ist.

In den Fig. 1 und 2 ist der Schlitz 110 als Kerbschlitz ausgebildet, der zwei im spitzen Winkel aufeinander zulaufende Flanken aufweist, was eine besonders feine Ansteuermöglichkeit des Ventiles für den Durchflußstrom erlaubt. Je feiner hier die Auflösung gewünscht wird, umso steiler, also in einem umso spitzeren Winkel, müssen die beiden Flanken aufeinander zulaufen. Anstelle dieses in den Fig. 1 und 2 gezeigten Kerbschlitzes sind aber auch andere Schlitzverläufe denkbar, bei denen der Kerbgrund anders ausgebildet ist, beispielsweise im Querschnitt nicht dreiecksförmig wie in den Fig.1 und 2 gezeigt, sondern rechteckförmig oder dergleichen.

Die vorstehende Beschreibung und die Zeichnung beschränken sich nur auf die Angabe von Merkmalen, die für die beispielsweise Verkörperung der Erfindung wesentlich sind.

## Patentansprüche

1. Ventil, insbesondere ein 2-Wege-Stromregelventil, mit Mitteln (108) zum freien Einstellen der Menge eines Durchflußstromes, die zusätzlich als
Mittel zum Erfassen des am Eingang (100) des Ventils anstehenden Druckes eine Ausgleichsbohrung (18) aufweisen, wobei dieser Druck entgegen der wirksamen Kraft eines Kraftspeichers (60) und
entgegen der wirksamen Kraft des am Ausgang (102) des Ventils herrschenden Druckes, zumindest mit einer Kraftkomponente auf ein Stellglied (32) einwirkt, mittels dem am Ausgang (102) des Ventils die Menge des Durchflußstromes regulierbar ist,
dadurch gekennzeichnet, daß über die Ausgleichsbohrung (18) der am Eingang (100) des Ventils anstehende Druck auf das Stellglied (32) einwirkt.

2. Ventil nach Anspruch 1, dadurch gekennzeichnet, daß die Mittel zum freien Einstellen der Menge des Durchflußstromes aus einer Meßblende (108) gebildet sind, die mittels einer Drosselspindel (14) verstellbar ist, die die Ausgleichsbohrung (18) aufweist, die mit einem ersten Druckraum (26) verbunden ist, in der ein als das Stellglied dienender Regelkolben (32) verfahrbar angeordnet ist, der den Druckraum (26) in mindestens zwei Teilräume (28,30) unterteilt, die über mindestens einen Durchgang (34) miteinander in Verbindung stehen und deren Volumen in Abhängigkeit von der Stellung des Regelkolbens (32) veränderbar ist.

3. Ventil nach Anspruch 2, dadurch gekennzeichnet, daß der Regelkolben (32) mindestens drei Flächen (62a,b,c) unterschiedlicher Größe aufweist, von denen
die größte Fläche (62a) mit dem in dem einen Teilraum (28) herrschenden Druck,
die mittlere Fläche (62b) mit dem in dem anderen Teilraum (30) herrschenden Druck und mit der Kraftkomponente des Kraftspeichers und
die kleinste Fläche von dem am Ausgang des Ventils herrschenden Druck,
beaufschlagbar ist.

4. Ventil nach Anspruch 3, dadurch gekennzeichnet, daß die kleinste und die mittelgroße Fläche (62c, 62b) zusammengenommen im wesentlichen der größten Kolbenfläche (62a) entsprechen, und daß die kleinste und die mittelgroße Fläche (62c, 62b) auf der einen Kolbenseite und die größte Fläche (62a) auf der anderen, der einen Kolbenseite gegenüberliegenden Kolbenseite des Regelkolbens (32), angeordnet sind.

5. Ventil nach einem der Ansprüche 2 bis 4, dadurch gekennzeichnet,
daß die Drosselspindel (14) mit der Ausgleichsbohrung (18) im Regelkolben (32) längsverfahrbar geführt ist, daß der Regelkolben (32) längsverfahrbar entlang der Wand (36) einer Aufnahmebohrung (10) geführt ist,
die zumindest teilweise einen weiteren zweiten Druckraum (102) begrenzt, der mindestens zwei Anschlüsse (100, 104) aufweist, die mit dem zweiten Druckraum (102) zum einen über die einstellbare Meßblende (108) und zum anderen über den einstellbaren Regelkolben (32) verbindbar sind.

6. Ventil nach einem der Ansprüche 2 bis 5, dadurch gekennzeichnet, daß die Meßblende (108) mindestens einen Schlitz (110) aufweist, mittels dem die Ausgleichsbohrung (18) mit dem zweiten Druckraum (102) verbindbar ist.

7. Ventil nach Anspruch 6, dadurch gekennzeichnet, daß der Schlitz (110) mindestens zwei Flanken (120a,b; 122a,b) aufweist, die im spitzen Winkel zueinander verlaufend in mindestens einer Verbindungslinie (124a,b) enden.

8. Ventil nach Anspruch 7, dadurch gekennzeichnet, daß die Meßblende (108) mittels der Drosselspindel (14) derart einstellbar ist, daß in einer ausgefahrenen Stellung der Drosselspindel (14) die Verbindung über den Schlitz (110) zwischen einem der Anschlüsse (100) und dem zweiten Druckraum (102) unterbindbar ist und daß je weiter die Drosselspindel (14) sich in einer eingefahrenen Stellung befindet, die Menge des über diesen Anschluß (100) zufließenden Durchflußstromes, der über den durch den Schlitz (110) gebildeten Zwischenraum (126a,b) in den zweiten Druckraum (102) strömt, zunimmt.

9. Ventil nach einem der Ansprüche 2 bis 8, dadurch gekennzeichnet, daß mittels dem längsverfahrbaren Regelkolben (32) der Querschnitt einer Regelblende (132) verstellbar ist, die zwischen einem der Anschlüsse (104) und dem zweiten Druckraum (102) angeordnet ist.

10. Ventil nach einem der Ansprüche 5 bis 9, dadurch gekennzeichnet, daß die Wand (36) der Aufnahmebohrung (10) Teil einer Patrone oder eines Ventilgehäuses (12) ist.

11. Ventil nach Anspruch 10, dadurch gekennzeichnet, daß die Aufnahmebohrung (10) aus einzelnen Bohrungen mit unterschiedlichen Durchmessern besteht und daß diese Durchmesser der Aufnahmebohrung (10) in Richtung der Meßblende (108), soweit das Ventil in der Aufnahmebohrung (10) eingesetzt ist, gegenüber dem jeweils vorangehenden Durchmesser abnehmen.

12. Ventil nach einem der Ansprüche 2 bis 11, dadurch gekennzeichnet, daß zum Verstellen der Drosselspindel (14) diese für die Betätigung von Hand mit einem Verstellmittel, vorzugsweise mit einem Stellteil (82), versehen ist und daß die Drosselspindel (14) an ihrem der Meßblende (108) abgekehrten Ende eine Meßskala (72) aufweist.

## Claims

1. Valve, in particular a two-way flow control valve, with means (108) for the free adjustment of the quantity of a flow, which additionally comprise a balance hole (18) as means for monitoring the pressure present at the inlet (100) of the valve, this pressure acting against the active force of an energy store (60) and against the active force of the pressure prevailing at the outlet (102) of the valve, at least by one force component on a control member (32), by means of which the quantity of the flow can be regulated at the outlet (102) of the valve, characterised in that by way of the balance hole (18), the pressure present at the inlet (100) of the valve acts on the control member (32).

2. Valve according to Claim 1, characterised in that the means for the free adjustment of the quantity of the flow are formed by a measuring orifice (108), which can be adjusted by means of a throttle spindle (14), which comprises the balance hole (18), which is connected to a first pressure chamber (26), in which a control piston (32) serving as the control member is arranged to move, which divides the pressure chamber (26) into at least two partial chambers (28, 30), which are connected to each other by way of at least one passage (34) and whereof the volume may be varied depending on the position of the control piston (32).

3. Valve according to Claim 2, characterised in that the control piston (32) comprises at least three surfaces (62a, b, c) of different size, whereof the largest surface (62a) is acted upon by the pressure prevailing in one partial chamber (28), the middle surface (62b) is acted upon by the pressure prevailing in the other partial chamber (30) and the force component of the energy store and the smallest surface is acted upon by the pressure prevailing at the outlet of the valve.

4. Valve according to Claim 3, characterised in that the smallest and the middle-sized surface (62c, 62b) taken together correspond substantially to the largest piston surface (62a) and that the smallest and the middle-sized surface (62c, 62b) are located on one side of the piston and the largest surface (62a) is located on the other piston side of the control piston (32) lying opposite one piston side.

5. Valve according to one of Claims 2 to 4, characterised in that the throttle spindle (14) with the balance hole (18) is guided to move longitudinally in the control piston (32), that the control piston (32) is guided to move longitudinally along the wall (36) of a receiving bore (10), which at least partly defines a further, second pressure chamber (102), which comprises at least two connections (100, 104), which can be connected to the second pressure chamber (102) on the one hand by way of the adjustable measuring orifice (108) and on the other hand by way of the adjustable control piston (32).

6. Valve according to one of Claims 2 to 5, characterised in that the measuring orifice (108) comprises at least one slot (110), by means of which the balance hole (18) can be connected to the second pressure chamber (102).

7. Valve according to Claim 6, characterised in that the slot (110) comprises at least two sides (120a, b; 122a, b), which extending at an acute angle with respect to each other, terminate in at least one connecting line (124a, b).

8. Valve according to Claim 7, characterised in that the measuring orifice (108) can be adjusted by means of the throttle spindle (14) so that in an extended position of the throttle spindle (14), the connection by way of the slot (110) between one of the connections (100) and the second pressure chamber (102) can be interrupted and the further the throttle spindle (14) is located in a retracted position, the greater the quantity of the flow flowing by way of this connection (100), which flows into the second pressure chamber (102) by way of the intermediate chamber (126a, b) formed by the slot (110).

9. Valve according to one of Claims 2 to 8, characterised in that by means of the longitudinally movable control piston (32), the cross-section of a control orifice (132) can be adjusted, which is located between one of the connections (104) and the second pressure chamber (102).

10. Valve according to one of Claims 5 to 9, characterised in that the wall (36) of the receiving bore (10) is part of a cartridge or a valve housing (12).

11. Valve according to Claim 10, characterised in that the receiving bore (10) consists of individual bores of different diameter and that these diameters of the receiving bore (10) in the direction of the measuring orifice (108), in so far that the valve is inserted in the receiving bore (10), decrease in comparison with the respectively preceding diameter.

12. Valve according to one of Claims 2 to 11, characterised in that for adjusting the throttle spindle (14), for actuation by hand, the latter is provided with adjusting means, preferably with an adjusting part (82) and that at its end remote from the measuring orifice (108), the throttle spindle (14) has a measuring scale (72).

## Revendications

1. Valve de commande de débit à deux voies qui comprend des moyens (101) pour régler à volonté le débit de circulation qui comprennent, en outre, pour appréhender la pression s'exerçant à l'entrée (100) de la valve, un perçage d'égalisation (18), ladite pression s'exerçant, à l'encontre de la force effective d'un réservoir de force (60) et à l'encontre de la force effective de la pression présente à la sortie de la valve, au moins avec une composante, sur un organe de réglage (32) au moyen duquel, à la sortie (102) de la valve, peut être réglé le débit du courant de circulation, caractérisée en ce que, par l'intermédiaire du perçage d'égalisation (18) la pression présente à l'entrée (100) de la valve s'exerce sur l'organe de réglage (32).

2. Valve selon la revendication 1, caractérisée en ce que les moyens permettant de régler librement le débit de circulation du courant comprennent un diaphragme de mesure (108) qui est réglable au moyen d'une broche de réglage ou d'étranglement (14) qui présente le perçage d'égalisation (18), qui communique avec un premier espace de pression (26), dans lequel un piston (32) faisant fonction d'organe de réglage est monté à mouvement, ledit piston divisant la chambre de pression (26) en, au moins, deux parties (28, 30) qui communiquent entre elles, au moins, par un passage (34) et dont les volumes sont variables en fonction de la position du piston de réglage (32).

3. Valve selon la revendication 2, caractérisée en ce que le piston de réglage (32) présente, au moins, trois surfaces (62a, b, c) ayant des dimensions différentes et dont :
la plus grande surface (62a) peut être exposée à la pression régnant dans la partie (28), régnant dans l'autre partie (30) et à la composante de force du réservoir de force, et que
la plus petite surface peut être exposée à la pression régnant à la sortie de la valve.

4. Valve selon la revendication 1, caractérisée en ce que la plus petite surface et la surface moyenne (62c et 62b) correspondent, ensemble, pratiquement à la plus grande surface de piston (62), et en ce que la plus petite surface et la surface moyenne (62c, 62b) sont situées d'un côté du piston, tandis que la plus grande surface (62a) est placée de l'autre côté du piston de réglage (32), côté qui est à l'opposé du premier.

5. Valve selon l'une quelconque des revendications 2 à 4, caractérisée en ce que la broche d'étranglement (14) est guidée longitudinalement avec son perçage d'égalisation (18), dans le piston de réglage (32), le long de la paroi (36) d'un logement (10) qui limite, au moins partiellement, une seconde chambre de pression (102) laquelle présente, au moins, deux raccords (100, 104) qui peuvent être reliés, d'une part, par un diaphragme de mesure réglable (108) et, d'autre part, par le piston de réglage réglable (32), avec la seconde chambre de pression (102).

6. Valve selon l'une quelconque des revendications 2 à 5, caractérisée en ce que le diaphragme de mesure (108) présente, au moins, une fente (110) au moyen de laquelle le perçage d'égalisation (18) peut être mise en communication avec la seconde chambre de pression (102).

7. Valve selon la revendication 6, caractérisée en ce que la fente (110) présente, au moins, deux flancs (120a, b et 122a, b) qui concourent en suivant une ligne de liaison (124a, b) en formant un angle aigu.

8. Valve selon la revendication 7, caractérisée en ce que le diaphragme de mesure (108) est réglable, au moyen d'une broche d'étranglement (14), de façon que, dans une position avancée de la broche d'étranglement (14), il interrompt la communication, par la fente (110) entre les raccords (100) et la seconde chambre de pression (102), tandis que, plus la broche d'étranglement est dans sa position rétractée, plus le volume du courant s'écoulant par ledit raccord (100), et qui traverse l'espace (120a, b) formé par la fente (110) dans le second espace de pression (102), augmente.

9. Valve selon l'une quelconque des revendications 2 à 8, caractérisée en ce que, au moyen du piston de réglage (32), déplaçable longitudinalement, la section d'un diaphragme de réglage (132) situé entre l'un des raccords (104) et la seconde chambre de pression (102), peut être modifiée.

10. Valve selon l'une quelconque des revendications 5 à 9, caractérisée en ce que la paroi (36) de l'ouverture de réception (10) fait partie d'une cartouche ou d'une enveloppe de valve (12).

11. Valve selon la revendication 10, caractérisée en ce que le perçage de réception (10) se compose de plusieurs perçages ayant des diamètres différents et en ce que ces diamètres des perçages (10) diminuent en direction du diaphragme de mesure (108) comparativement aux diamètres précédents, dans la mesure où la valve est insérée dans le perçage de réception (10).

12. Valve selon l'une quelconque des revendications 2 à 11, caractérisée en ce que, pour déplacer la broche d'étranglement (14.), celle-ci est pourvue, aux fins d'actionnement manuel, d'un moyen de déplacement, de préférence, d'un élément de positionnement (82), et en ce que la broche d'étranglement (14) comporte, à son extrémité orientée à l'opposé du diaphragme de mesure (108), une échelle graduée (72).
